# EUROPÄISCHE PATENTSCHRIFT

(11) **EP 1 298 006 B1**
(45) Veröffentlichungstag und Bekanntmachung des Hinweises auf die Patenterteilung: **18.05.2005**
(21) Anmeldenummer: 02017903.2
(22) Anmeldetag: 09.08.2002
(51) Int. Cl.: B60R 16/02

(54) **Vorrichtung zur Erhöhung der Standsicherheit bei mobilen Krananlagen**
Device for increasing the stability of mobile cranes
Dispositif pour augmenter la stabilité de grues mobiles

(30) Priorität: 27.09.2001 DE 10147777
(43) Veröffentlichungstag der Anmeldung: 02.04.2003
(73) Patentinhaber: Rheinmetall Landsysteme GmbH, 24159 Kiel (DE)
(72) Erfinder: Nickel, Helge, 24214 Noer (DE); Runow, Eitel, 24620 Bönebüttel (DE)
(74) Vertreter: Dietrich, Barbara, Dipl.-Ing.

(56) Entgegenhaltungen:
- WO-A-91/04938
- DE-A- 2 641 083
- DE-A- 19 637 124
- GB-A- 1 470 175
- US-A- 5 731 987

## Beschreibung

Die Erfindung bezieht sich auf Kranfahrzeuge, speziell Berge-Panzer mit einer Krananlage. Bei diesen Fahrzeugen, die schwere Lasten am Kranhaken anheben und versetzen und die auch auf unebenem oder weichem Boden arbeiten sollen, ist eine Überwachung der Standsicherheit erforderlich. Generell muß vermieden werden, dass der Fahrzeugkran mit einer großen Last und weit ausgeschwenktem Kranausleger umkippt. Zu diesem Zweck wird eine bekannte Lastmomentbegrenzung verwendet, die last- und auslegerlageabhängig entsprechende Warnmeldungen abgibt oder fallweise sogar den Kran abschaltet.

Bei Hebezeugen wie Krananlagen ist es auch gesetzlich vorgeschrieben, Schutzeinrichtungen zu installieren, die eine Gefährdung von Personen und Material verhindern sollen. Diese Einrichtungen begrenzen zum einen eine mögliche Überlast und zum anderen wird eine Konturbegrenzung eingehalten, um das eigene Gerät und die Bediener nicht zu gefährden.

Insbesondere Krananlagen auf mobilen Fahrgestellen, die jeweils am Einsatzort unterschiedliche Standbedingungen vorfinden, sind auf diese Last-Moment-Begrenzungen (LMB) zwingend angewiesen, um die Standsicherheit nicht zu gefährden. LMB überwachen die physikalischen Bedingungen (hydraulische Drücke, mechanische Wege und Spannungen u.a.) einer Krananlage im Betrieb.

Die US-A-5 731 987 entspricht dem Oberbegriff des Anspruchs 1.

Nach dem Stand der Technik sind verschiedene Vorschläge für den Aufbau und Einsatz von Kippüberwachungseinrichtungen gemacht worden.

In der DE 199 18 597 wird zum Beispiel ein Verfahren vorgeschlagen, dass die Kippgefahr von fahrenden Strassenfahrzeugen vermindern soll.

In der DE 34 34 689 wird ein Kippwarngerät beschrieben, welches mittels eines quecksilbergefüllten Röhrchens bei Fahrzeugneigung entsprechend einem Kippwinkel ein Schaltsignal für eine Warnmeldung ausgibt.

Aus der DE 42 36 328 ist ein kombinierter Beschleunigungs- und Neigungssensor bekannt, der bei Neigung oder Beschleunigung ein größenabhängiges Schaltsignal abgibt mittels einer Vielzahl von Kontaktstellen.

Aus der DE 42 17 247 ist ein Neigungssensor nach dem Prinzip eines gedämpften Pendels beschrieben, welcher zur Überwachung der Fahrzeugneigung herangezogen wird.

Aufgabe der Erfindung ist es, eine bekannte Lastmomentbegrenzung so zu verbessern, dass sie erhöhten Sicherheitsanforderungen entspricht, wobei
- ein Fehlerfall oder Ausfall in der bestehenden LMB nicht zu einem möglichen Umkippen des Krans führen,
- der Beginn eines Kippens frühzeitig erkannt werden und
- die Sicherheit der Kategorie 3 nach DIN 954-1 erreicht werden soll.

Diese Aufgabe wird erfindungsgemäß durch die kennzeichnenden Merkmale des Anspruchs 1 gelöst. Weitere Merkmale ergeben sich aus den Unteransprüchen.

Erfindungsgemäß wird eine zusätzliche Standsicherheitsüberwachung (2) mit einem zusätzlichen Geber (7) und weiteren Betriebszustands- und Steuerelementen (8, 9, 10) zusammen mit der bekannten Lastmomentbegrenzung (1) und einer Steuereinheit (4) und einem Test- und Prüfsystem (3) eingesetzt.

Die Vorteile der Erfindung liegen darin, dass die Sicherheit der mobilen Krananlage und damit der Unfallschutz für die Bediener und Geräte wesentlich erhöht wird.

Ein Ausführungsbeispiel der Erfindung ist in der Zeichnung schematisch dargestellt und wird im folgenden näher beschrieben. Es zeigen:

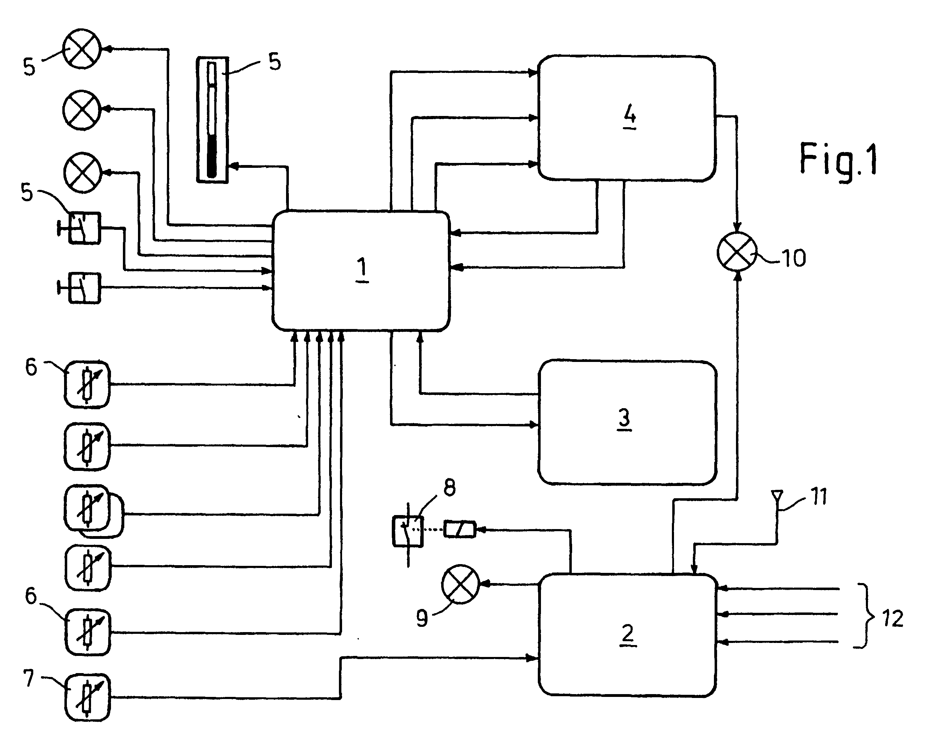

- Figur 1:: ein Prinzipbild mit zusätzlicher Überwachung

Die einzige Figur 1 zeigt eine bekannte Lastmomentbegrenzung 1, die mit einer zusätzlichen Standsicherheitsüberwachung 2, einem Test- und Prüfsystem 3 und einer Steuereinheit 4 zusammengeschaltet ist. Die zusätzliche Überwachung 2 besitzt einen eigenen Wankwinkelgeber 7, der unabhängig von den Gebern 6 der Lastmomentbegrenzung arbeitet, und einen Steuerausgang 8, mit dem die Kranhydraulik ausgeschaltet werden kann. Eine Betriebsbereitmeldung 9 und eine Warnmeldung 10 werden ebenfalls von der Überwachung 2 angesteuert. Eine unabhängige Batteriestromversorgung 11 versorgt die Überwachung 2 und weitere Meldeeingänge 12 zur Überwachung der Anlage werden eingespeist.

Nach Einschalten der Kranfunktion erfolgt die Nullpunktnahme der Überwachung 2 bezüglich des Wankwinkels des Fahrzeugs und damit seiner Schieflage. Bei einer Schieflage oder Wanken des Fahrzeugs größer als eine festgelegte Neigung als Grenzwert löst die zusätzliche Überwachung aus und schaltet die Kranhydraulik ab und die Zentralwarnung 10 wird angesteuert. Dieser Grenzwert liegt außerhalb der zulässigen Lastkurven und innerhalb der Kippgrenze.

Nach der Auslösung und Abschaltung der Kranhydraulik kann zum Beispiel mittels eines Notschalters Hydraulik die Kranhydraulik wieder eingeschaltet und die Last vom Bediener aus dem Gefahrenbereich bewegt werden.

Die Überwachung ist so ausgelegt, daß sie nur dann auslöst, wenn unzulässig hohe Kranlasten von der Lastmomentbegrenzung 1 nicht erkannt werden. Dies kann der Fall sein bei zum Beispiel Driftausfall im Elevations-, Azimut- oder Wankwinkelgeber der LMB. Die Überwachung wird regelmäßig auf Fehler überprüft, damit keine unerkannten Fehler auftreten können. Dies erfolgt beispielsweise bei einem LMB-Test vor der Kranbenutzung.

## Patentansprüche

1. Vorrichtung für die Erhöhung der Standsicherheit bei mobilen Krananlagen speziell Bergepanzem mit einer Lastmomentbegrenzung (1), einer Steuereinheit (4) und einem Test- und Prüfsystem (3) auf dem Fahrzeug und einschliesslich Messwertgebem (6) und Befehlseingabe- und Meldeeinrichtungen (5) für die Lastmomentbegrenzung
**dadurch gekennzeichnet,**
**dass** eine zusätzliche Signalverarbeitungseinheit als zusätzliche Standsicherheitsüberwachung (2) mit einem eigenen und zusätzlichen Wankwinkelgeber (7) und einem Steuerausgang (8), der die Kranhydraulik abschalten kann, und sonstigen erforderlichen Meldeausgaben (9, 10) und Signaleingaben (12) im Zusammenwirken mit der bekannten Lastmomentbegrenzung eingesetzt wird.

2. Vorrichtung nach Anspruch 1
**dadurch gekennzeichnet,**
**dass** ein zweiter Wankwinkelgeber (7) zusätzlich zu dem Messwertgeber (6) der Lastmomentbegrenzung eingesetzt wird.

3. Vorrichtung nach Anspruch 1 und 2
**dadurch gekennzeichnet,**
**dass** ein Schaltausgang (8) als Schaltrelais, Magnetventil oder Leistungsschalter von der Überwachung (2) angesteuert werden kann, der die Kranhydraulik abschalten kann.

## Claims

1. Device for increasing the stability of mobile cranes, in particular recovery tanks, having a load torque limitation device (1), a control unit (4) and a test system (3) on the vehicle and including measured value sensors (6) and command-input and signalling devices (5) for the load torque limitation device, **characterized in that** an additional signal processing unit is used in conjunction with the known load torque limitation device as an additional stability monitoring device (2) having a dedicated and additional rolling angle sensor (7) and a control output (8), which can disconnect the crane hydraulics, and other necessary signal outputs (9, 10) and signal inputs (12).

2. Device according to Claim 1, **characterized in that** a second rolling angle sensor (7) is used in addition to the measured value sensor (6) of the load torque limitation device.

3. Device according to Claims 1 and 2, **characterized in that** a switching output (8) can be driven as a switching relay, a solenoid valve or a circuit breaker by the monitoring device (2) which can disconnect the crane hydraulics.

## Revendications

1. Dispositif pour augmenter la stabilité de grues mobiles de chars spéciaux de dépannage, doté d'un dispositif (1) de limitation du couple de charge, d'une unité de commande (4) et d'un système (3) de test et de vérification prévus sur le véhicule, notamment des capteurs (6) de valeurs de mesure et des dispositifs (5) d'introduction de commandes et de communication pour la restriction du couple de charge, **caractérisé en ce qu'**une unité supplémentaire de traitement des signaux, qui sert de surveillance supplémentaire (2) de la stabilité, avec un capteur (7) d'angle de vacillement et une sortie de commande (8) qui peut débrancher l'hydraulique de la grue, et avec les autres sorties de communication (9, 10) et les introductions de signaux (12) nécessaires, est utilisé en coopération avec la restriction connue du couple de charge.

2. Dispositif selon la revendication 1, **caractérisé en ce qu'**une deuxième sonde (7) d'angle de vacillement est utilisée en plus de la sonde (6) de valeurs de mesure de la restriction du couple de charge.

3. Dispositif selon les revendications 1 et 2, **caractérisé en ce qu'**une sortie de commutation (8) qui peut être commandée comme relais de communication, soupape magnétique ou commutateur de puissance peut être commandée par la surveillance (2) et peut débrancher l'hydraulique de la grue.
